Europäisches Patentamt

European Patent Office

Office européen des brevets

(11) Numéro de publication: **0 371 846**

**A1**

# (12) DEMANDE DE BREVET EUROPEEN

(21) Numéro de dépôt: **89403173.1**

(51) Int. Cl.5: **C01B 21/082, D01F 9/10**

(22) Date de dépôt: **17.11.89**

(30) Priorité: **25.11.88 FR 8815393**

(43) Date de publication de la demande:
**06.06.90 Bulletin 90/23**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex(FR)**

(72) Inventeur: **Duboudin, Françoise**
**21, Avenue de Maréchal Juin**
**F-33600 Pessac(FR)**
Inventeur: **Pillot, Jean-Paul**
**6, Allée de la Sanguine**
**F-33610 Cestas(FR)**
Inventeur: **Dunogues, Jacques**
**22, Avenue du Président Poincaré**
**F-33400 Talence(FR)**
Inventeur: **Birot, Marc**
**7, Rue Bellevue**
**F-33850 Leognan(FR)**
Inventeur: **Babot, Odile**
**Les Bosquets de Chambéry 86, Chemin de**
**Pauge**
**F-33140 Villenave D'Ornon(FR)**
Inventeur: **Pailler, René**
**Allée de la Lande**
**F-33610 Cestas(FR)**

(74) Mandataire: **Cazes, Jean-Marie et al**
**RHONE-POULENC CHIMIE Service Brevets**
**Chimie 25, Quai Paul Doumer**
**F-92408 Courbevoie Cédex(FR)**

(54) **Procédé de préparation de carbonitrure de silicium à partir de polycarbosilanes.**

(57) L'invention a trait à un procédé de préparation de carbonitrure de silicium à partir d'un polycarbosilane qui est caractérisé par le fait qu'il comprend les étapes suivantes :

(a) on met en contact avec du soufre à l'état vapeur au moins un polycarbosilane présentant au moins deux groupes $\equiv$ SiH par molécule,

(b) on traite thermiquement sous une atmosphère d'ammoniac le produit issu de (a)

(c) et enfin, on traite thermiquement sous vide ou dans une atmosphère inerte le produit issu de (b).

Le procédé se prête particulièrement bien à la fabrication de fibres céramiques à base de carbonitrure de silicium.

## PROCEDE DE PREPARATION DE CARBONITRURE DE SILICIUM A PARTIR DE POLYCARBOSILANES

L'invention a trait à un procédé de préparation de produits céramiques à base de carbonitrure de silicium à partir de composés organosiliciés de type polycarbosilane.

L'idée de préparer des produits céramiques par dégradation thermique, en atmosphère controlée, de composés polymériques organosiliciés n'est pas nouvelle et, à ce jour, de nombreux articles et brevets ont été publiés sur le sujet.

L'intérêt de la voie polymère réside surtout dans les possibilités de mise en forme de ce type de produit, et plus particulièrement pour l'obtention, après pyrolyse, de fibres céramiques.

Selon un schéma dèsormais classique, des précurseurs polymériques du type polycarbosilane (après fusion éventuelle s'ils sont initialement à l'état solide) sont filés par extrusion sous la forme de fibres continues, ces fibres sont ensuite traitées dans le but notamment d'améliorer leur tenue thermique et/ou mécanique, puis pyrolysées sous une atmosphère convenablement choisie pour aboutir à la fibre en céramique désirée.

Le pré-traitement de la fibre préalablement à sa pyrolyse, appelé souvent indifféremment traitement de durcissement, d'infusibilité ou bien encore de réticulation, constitue une étape essentielle de tout procédé visant à la préparation de fibres céramiques.

A ce jour, le durcissement des fibres en polycarbosilane fait appel soit à des méthodes physiques (bombardement électronique, rayonnement ultra-violet, etc...) soit à des méthodes chimiques.

Les méthodes physiques précitées présentent l'inconvénient majeur d'être de mise en oeuvre délicate et onéreuse. La seule voie économiquement retenue à l'échelle industrielle est le durcissement chimique au moyen d'un traitement à l'oxygène.

Il est d'autre part connu :

1- que la pyrolyse, sous atmosphère inerte ou sous vide, d'un polycarbosilane pré-traité soit physiquement soit à l'oxygène, conduit à des céramiques à base de carbure de silicium

2- que la pyrolyse, sous ammoniac, d'un polycarbosilane pré-traité à l'oxygène conduit dans tous les cas à des produits céramiques contenant de l'oxynitrure de silicium (ceci résultant de l'introduction d'oxygène lors du pré-traitement)

3- et enfin que la pyrolyse, sous ammoniac, d'un polycarbosilane pré-traité physiquement conduit, selon les températures mises en jeu, soit à du carbonitrure de silicium, soit à du nitrure de silicium (substitution partielle ou totale des atomes de carbone par des atomes d'azote)

Il n'existe donc pas à ce jour de procédés de préparation de carbonitrure de silicium qui, partant de polycarbosilanes, permettraient d'éviter les inconvénients résultants de la mise en oeuvre nécessaire des pré-traitements physiques cités ci-dessus.

La présente invention vise à la satisfaction de ce besoin, en proposant des moyens simples, efficaces, économiques et de mise en oeuvre aisée qui permettent d'aboutir sous des formes les plus diverses (fils, articles moulés, revêtements, pellicules, etc...) à des produits céramiques à base de carbonitrure de silicium.

On a maintenant trouvé que ce but, et d'autres, peuvent être atteints au moyen de la présente invention qui concerne en effet un procédé de préparation de produits céramiques à base de carbonitrure de silicium à partir d'un polycarbosilane, et qui est caractérisé par le fait qu'il comprend les étapes suivantes :

(a) on met en contact avec du soufre à l'état vapeur au moins un polycarbosilane présentant au moins deux groupes ≡ SiH par molécule,

(b) on traite thermiquement sous une atmosphère d'ammoniac le produit issu de (a)

(c) et enfin, on traite thermiquement sous vide ou dans une atmosphère inerte le produit issu de (b).

Comme il sera expliqué plus on détails ci-après, il est possible en jouant convenablement sur les conditions des traitements thermiques définis ci-dessus, de préparer à volonté une gamme importante de carbonitrure de silicium, ce qui confère au procédé selon l'invention l'avantage supplémentaire d'être d'une très grande souplesse.

Dis d'autres caractéristiques, aspects et avantages de l'invention apparaitront encore plus complètement à la lecture de la description qui va suivre et des exemples concrets, mais non limitatifs, relatifs à sa mise on oeuvre.

Les polycarbosilanes destinés à être traités selon l'invention sont des composés bien connus de l'état de la technique qui peuvent être préparés suivant une large variété de procédés à partir d'une gamme étendue de produits de départ.

On rappelle ici simplement que les polycarbosilanes sont des composés organosiliciés ayant comme constituants principaux du squelette des atomes de carbone et des atomes de silicium, et pouvant présenter des structures de type linéaire, cyclique ou mixte, c'est à dire des structures dans lesquelles des motifs de carbosilanes linéaires et des motifs de carbosilanes cycliques sont liés chimiquement.

Selon l'invention, ces polycarbosilanes doivent contenir au moins deux, et de préférence au moins 3 groupes $\equiv$ SiH par molécule.

La synthèse de tels produits peut être réalisée en suivant l'enseignement de base décrit notamment dans les demandes de brevet FR-A-2.308.590, FR-A-2.308.650, FR-A-2.327.836, FR-A-2.345.477, FR-A-2.487.364 et EP-A-51.855, toutes citées ici à titre de références non limitatives.

Bien entendu, préalablement au traitement de durcissement selon l'invention développé plus en détails ci-après, les polycarbosilanes peuvent avoir subi des opérations de mise en forme permettant d'aboutir aux configurations les plus diverses, telles que filaments, fibres, articles moulés, revêtements de support, et autres. Le traitement selon l'invention est ainsi avantageusement applicable au durcissement des fibres de polycarbosilane qui, une fois traitées, sont destinées par pyrolyse à engendrer des fibres céramiques à base de carbonitrure de silicium.

Conformément à l'invention, et après donc mise en forme éventuelle, les polycarbosilanes définis ci-dessus sont alors traités au moyen de vapeurs de soufre.

Ces vapeurs de soufre peuvent être utilisées pures, ou bien encore diluées dans un gaz inerte, tel qu'un gaz d'argon (ou tout autre gaz rare) ou d'azote par exemple.

La mise en contact polycarbosilane/vapeurs peut être statique ou dynamique, c'est à dire réalisée sous balayage.

Ces vapeurs peuvent avoir été générées par tout moyen connu en soi, notamment par vaporisation de soufre, ou bien encore par décomposition de tout autre susceptible d'engendrer du soufre dans les conditions pratiques du traitement selon l'invention.

La température à laquelle est menée le traitement peut varier dans une large mesure et dépend de la nature du polycarbosilane à durcir.

D'une manière pratique, cette température est généralement comprise entre 150°C et la température de ramollissement du polymère ; il est même possible d'opérer à des températures supérieures à ce point de ramollissement, compte tenu du caractère quasiment instantané du procéssus de durcissement du polycarbosilane en présence de vapeurs soufrées. Néanmoins, et de préférence, la température du traitement est comprise entre 200°C et une température légèrement inférieure à celle correspondant au point de ramollissement du polycarbosilane à durcir.

La durée du traitement selon l'invention n'est pas critique, et peut varier de quelques secondes à plusieurs jours, et de préférence de quelques minutes à quelques heures.

D'une manière générale, cette durée est liée à la température du traitement : plus cette température est élevée et plus la durée du traitement peut être raccourcie.

A l'issue du traitement selon l'invention, on récupère un polycarbosilane parfaitement infusible et insoluble dans la plupart des solvants organiques, notamment dans l'hexane.

Selon la quantité de soufre mise en jeu, la durée et la température du traitement, ainsi que la nature du polycarbosilane de départ, le produit traité peut contenir des quantités de soufre généralement comprises entre 3 et 30 % en poids par rapport à la masse totale du produit, et de préférence entre 10 et 20 % en poids.

Sans vouloir limiter l'invention à une quelconque théorie, la disparition progressive des bandes $\equiv$ SiH observables par analyse infra-rouge sur le polymère en cours de traitement, semble indiquer que le durcissement selon l'invention pourrait s'opérer par la création de liaisons du type $\equiv$ Si - SH donnant des pontages du type $\equiv$ Si - S - Si $\equiv$ au sein dudit polymère.

Le soufre ainsi incorporé s'élimine alors progressivement au cours des traitements thermiques ultérieurs destinés à transformer le polycarbosilane durci en carbonitrure de silicium, comme il va être expliqué plus en détails maintenant.

Le premier traitement thermique, qui est donc réalisé sous atmosphère d'ammoniac, a pour but d'introduire de l'azote dans le réseau du polycarbosilane.

L'atmosphère d'ammoniac peut être statique ou dynamique.

La température du traitement peut varier de 25 à 900°C environ, et sa durée de quelques minutes à plusieurs heures.

Pour des températures de traitement relativement modérées, c'est à dire n'excédant pas environ 500°C, l'introduction de l'azote se fait par remplacement et élimination du soufre qui était préalablement contenu dans le polycarbosilane durci ; globalement, la quantité molaire d'azote qui peut être alors introduite dans ledit polycarbosilane correspond sensiblement à la quantité molaire de soufre initialement présente.

Dans ces conditions, et si le traitement est mené jusqu'à son terme, la quantité de soufre résiduel dans

3

le produit traité peut être très faible.

Lorsqu'on opère à des températures plus élevées, c'est à dire des températures pouvant être comprises entre environ 500°C et 900°C, des quantités d'azote supplémentaires peuvent encore être introduites, mais cette fois selon un mécanisme réactionnel différent : il y a alors remplacement du carbone par l'azote.

On doit néanmoins veiller à ne pas opérer à des températures trop élevées, c'est à dire proches ou supérieures à environ 900°C et ceci pour ne pas procéder à une élimination totale du carbone qui aurait alors pour effet d'engendrer non plus du carbonitrure de silicium mais du nitrure de silicium, ce qui n'est pas ici l'objet de la présente invention.

Lorsque les quantités d'azote désirées ont été introduites dans le polycarbosilane, on soumet alors le produit à un second traitement thermique destiné a engendrer, par céramisation, le carbonitrure de silicium désiré.

Ce second traitement thermique est opéré sous vide ou sous une atmosphère inerte, telle que d'argon (ou tout autre gaz rare) ou d'azote, et à une température pouvant être comprise entre 800 et 1500°C, jusqu'à ce que le produit soit entièrement transformé en une céramique à base de carbonitrure de silicium.

Comme déjà indiqué ci-avant dans la description, le procédé selon l'invention se prête particulièrement bien à la fabrication de fibres céramiques à base de carbonitrure de silicium qui, elles-mêmes, peuvent trouver des applications intéressantes pour le renforcement des matériaux dites à matrice verre, plastique, métal, céramique ou autres.

Des exemples vont maintenant être donnés pour illustrer les divers aspects de l'invention dans le cadre particulier de la préparation de fibres céramiques à base de carbonitrure de silicium.

## Préparation des fibres en polycarbosilane

Le polycarbosilane utilisé a été synthétisé par chauffage d'un polydiméthylsilane à 470°C dans un autoclave, selon le mode opératoire décrit par S. YAJIMA et al (J. Mater. Sci., 1978 (13), 2569, et demande de brevet français FR-A-2.308.650).

L'élimination sélective des fortes masses moléculaires contenues dans les échantillons de polycarbosilanes ainsi préparés (étape facultative mais préférable pour le filage sous forme de fibres) peut être réalisée notamment par dissolution sélective des polymères de masses moyennes dans de l'acétate d'éthyle (température : 30-50°C) puis récupération du polycarbosilane ainsi dissout.

Des polycarbosilanes commerciaux, tels que ceux vendus par la société NIPPON CARBON peuvent aussi, par commodité, être employés comme matière première.

Les polycarbosilanes ainsi obtenus sont alors extrudés puis filés sous forme de fibres présentant un diamètre moyen de 15 μm.

## Durcissement des fibres en polycarbosilane

L'appareillage de durcissement au soufre est constitué d'une enceinte tubulaire chauffée par un four résistif dans laquelle passe un faible courant d'argon purifié (ou indifféremment d'azote purifié). Une nacelle contenant du soufre solide, positionnée dans une partie amont de l'enceinte où la température est supérieure à 140°C, va libérer du soufre sous forme vapeur. Le soufre libéré va être transporté par le gaz vecteur jusqu'aux fibres de polycarbosilane qui ont été préalablement disposées dans une seconde nacelle positionnée dans une partie avale de l'enceinte où la température régnante est $\theta_1$.

La vitesse de montée en température jusqu'à $\theta_1$ a été réglée comme suit :
- ambiante→ 140°C : 60°C/h
- 140°C → $\theta_1$ : 5°C/h

Le tableau I ci-dessous résume les divers essais de durcissement (essais A1 à A1) pour des $\theta_1$ différents.

4

TABLEAU I

| ESSAI | TEMPERATURE DE DURCISSEMENT $\theta_1$ | TEMPS DE MAINTIEN A $\theta_1$ | POURCENTAGE MASSIQUE DE SOUFRE SUR FIBRE TRAITEE | ASPECT | REMARQUES |
|-------|------------------|----------|---------------------|--------|-----------|
| A1 (compa- ratif) | - | - | 0 | blanches | sans traitement F |
| A2 | 180°C | 4 H | 3,5 | jaune paille | I / F |
| A3 | 200°C | 4 H | 4,5 | | I |
| A4 | 220°C | 4 H | 6 | | I |
| A5 | 240°C | 4 H | 7 | brun clair | I |

Rem. : F signifie fusible
I signifie infusible

Les fibres obtenues à l'issue de ce traitement sont infusibles (ou presque pour l'essai A2) et insolubles, notamment dans l'hexane.

L'analyse par infra-rouge indique la disparition progressive de la bande $\gamma$(Si-H) présente dans le polycarbosilane initial lorsque le taux de soufre croit.

Traitement sous ammoniac puis pyrolyse des fibres

Les fibres obtenues après traitement selon l'essai A4 précédent sont alors disposées soit dans un four tubulaire, soit dans un analyseur thermogravimétrique, et portées progressivement à une température $\theta_2$ et maintenues à cette température pendant un temps $t_2$ compris entre 30 mn et 60 mn, et ceci sous courant d'ammoniac purifié (débit : 10 ml/mn).

La pyrolyse a été effectuée soit on ampoule de silice scellée sous vide pour les températures de 850° C, soit sous un balayage d'argon purifié pour les autres températures ($\theta_3$ : température de pyrolyse ; $t_3$ : temps de maintien à cette température).

Le tableau II ci-dessous résume les divers résultats obtenus (essais B1 à B9). L'essai $B_1$ a été réalisé sur des fibres non traitées au soufre (essai comparatif).

L'essai B2 a été réalisé sur des fibres traitées au soufre mais non traitées à l'ammoniac ; les fibres obtenues sont alors à base de carbure de silicium. Les essais B8 et B9 correspondent à des fibres non céramisées.

Dans les autres essais, les fibres obtenues en fin de traitement sont à base de carbonitrure de silicium.

Remarque

Les pourcentages massiques de soufre apparement plus élevés dans les essais B2, B3, B4 et B8 que dans le produit de départ (essai A4) s'expliquent par le fait que, lors des traitements thermiques, d'autres éléments peuvent s'éliminer plus vite que le soufre.

TABLEAU II

| ESSAI | CONDITIONS DE TRAIT. NH$_3$ ($\theta_2$/t$_2$) | CONDITIONS DE PYROLYSE ($\theta_3$/t$_3$) | % S MASSIQUE | % N MASSIQUE | ASPECT DE LA FIBRE |
|---|---|---|---|---|---|
| B 1 * | 700°C/1h | 950°C/1h | 0 | 26 | noir fibres fondues |
| B 2 | sans | 850°C/30 mn | 9 | 0 | fibres brun foncé non collées |
| B 3 * | 220°C/30 mn | 950°C/1h | 8,3 | 2,5 | fibres noires intactes |
| B 4 | 300°C/30 mn | 850°C/30 mn | 6,5 | 1 | fibres noires non collées |
| B 5 | 500°C/30 mn | 850°C/30 mn et 1400°C/15 mn | 0,3 | 3 | fibres noires non collées |
| B 6 | 500°C/30 mn | 850°C/30 mn | 1 | 3 | fibres noires non collées |
| B 7 | 500°C/30 mn | 850°C/30 mn et 1200°C/15 mn | 0,4 | 4,5 | fibres noires non collées |
| B 8 * | 370°C/30 mn | sans pyrolyse | 9,5 | 0,85 | fibres oranges |
| B 9 * | 570°C/1 h | sans pyrolyse | 0,3 | 13 | fibres oranges |

* : signifie que la fibre est traitée à l'ammoniac dans un analyseur thermogravimétrique

**Revendications**

1/ Procédé de préparation de carbonitrure de silicium à partir d'un polycarbosilane, caractérisé par le fait qu'il comprend les étapes suivantes :

(a) on met en contact avec du soufre à l'état vapeur au moins un polycarbosilane présentant au moins deux groupes ≡ SiH par molécule,

(b) on traite thermiquement sous une atmosphère d'ammoniac le produit issu de (a),

(c) et enfin, on traite thermiquement sous vide ou dans une atmosphère inerte le produit issu de (b).

2/ Procédé selon la revendication 1 caractérisé en ce que ledit polycarbosilane présente au moins trois groupes ≡ SiH par molécule.

3/ Procédé selon l'une quelconque des revendications 1 et 2 caractérisé en ce que ladite mise en contact se fait à une température comprise entre 150°C et la température correspondant au point de ramollissement du polycarbosilane.

4/ Procédé selon la revendication 3 caractérisé en ce que ladite température est comprise entre 200°C et une température légèrement inférieure à celle correspondant au point de ramollissement du polycarbosilane.

5/ Procédé selon l'une quelconque des revendications 1 à 4 caractérisé en ce que ledit soufre à l'état vapeur est dilué dans un gaz inerte, tel que d'argon ou d'azote.

6/ Procédé selon l'une quelconque des revendications 1 à 5 caractérisé en ce que ladite mise en contact est de type statique ou dynamique.

7/ Procédé selon l'une quelconque des revendications précédentes caractérisé en ce que, préalablement à ladite mise en contact, on met ledit polycarbosilane à une forme d'article désirée.

8/ Procédé selon la revendication 7 caractérisé en ce que ladite forme est une fibre.

9/ Procédé selon l'une quelconque des revendications précédentes caractérisé en ce que ledit traitement thermique sous ammoniac est conduit à une température comprise entre environ 25 et 900°C.

10/ Procédé selon l'une quelconque des revendications précédentes caractérisé en ce que le traitement thermique sous vide ou sous atmosphère inerte est conduit à une température comprise entre environ 800 et 1500°C.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 266 860  (DOW CORNING)<br>* Revendications 1,7; page 3, lignes 1-4 *<br>--- | 1,5,6 | C 01 B  21/082<br>D 01 F  9/10 |
| A | EP-A-0 259 944  (DOW CORNING)<br>* Résumé; page 14, alinéa 2 *<br>--- | 1,5,6 | |
| A | EP-A-0 280 387  (DOW CORNING)<br>* Résumé; page 6, lignes 29-32 *<br>--- | 1,5,6 | |
| A | EP-A-0 245 047  (CELANESE)<br>--- | 6 | |
| A | EP-A-0 200 326  (DOW CORNING)<br>* En entier *<br>--- | 1,3,4,7 -10 | |
| A | EP-A-0 208 630  (RHONE-POULENC)<br>* Revendication 1 *<br>--- | 1,2 | |
| A | EP-A-0 051 855  (UBE)<br>--- | | |
| A | COMPOSITES, vol. 18, no. 2, avril 1987, pages 107-120, Butterworth & Co., Ltd, Guildford, Surrey, GB; K. OKAMURA: "Ceramic fibres from polymer precursors"<br>----- | | |

**DOMAINES TECHNIQUES RECHERCHES (Int. Cl.5)**

C 01 B  21/00
C 04 B  35/00

Le présent rapport a été établi pour toutes les revendications

| Lieu de la recherche | Date d'achèvement de la recherche | Examinateur |
|---|---|---|
| LA HAYE | 06-03-1990 | ZALM W.E. |

EPO FORM 1503 03.82 (P0402)